# EUROPÄISCHE PATENTANMELDUNG

(11) **EP 3 150 756 A1**
(43) Veröffentlichungstag der Anmeldung: **05.04.2017**
(21) Anmeldenummer: 15187840.2
(22) Anmeldetag: 01.10.2015
(51) Int. Cl.: D04H 1/60, B29C 70/50, D04H 3/04, D04H 3/12, B29B 15/12

(54) **VERFAHREN ZUR HERSTELLUNG EINES FASER-MATRIX-HALBZEUGS**

(71) Anmelder: LANXESS Deutschland GmbH, 50569 Köln (DE)
(72) Erfinder: Matthias Bienmüller, 47803 Krefeld (DE); Detlev Joachimi, 47800 Krefeld (DE); Wolfgang Wambach, 51065 Köln (DE); Jochen Endtner, 51065 Köln (DE)

(57) **Zusammenfassung**

Die vorliegende Erfindung betrifft ein Verfahren zur Herstellung eines Faser-Matrix-Halbzeugs unter Einsatz von Mikrogranulaten.

## Beschreibung

Die vorliegende Erfindung betrifft ein Verfahren zur Herstellung eines Faser-Matrix-Halbzeugs unter Einsatz von Mikrogranulaten.

### Stand der Technik

In anspruchsvollen Anwendungen, wie beispielsweise Formteilen für den Fahrzeugbau und Luftfahrtanwendungen, sind Faserverbundwerkstoffe aufgrund einer einzigartigen Kombination aus geringem Gewicht, hoher Festigkeit und Temperaturbeständigkeit erwünscht.

Faserverbundwerkstoffe werden hergestellt unter Verwendung eines Fasermaterial enthaltenden Faserhalbzeugs. Faserhalbzeuge sind vorzugsweise Vliesstoffstrukturen, Textilien, Gewebe, unverfestigte Faservliese und Kombinationen derselben. Fasermaterialien sind Rovings, also Bündel, Stränge oder Multifilamentgarne aus parallel angeordneten Filamenten bzw. Endlosfasern oder Langfasern. Für die Herstellung von Faserverbundstrukturen, auch Faser-Matrix-Halbzeuge genannt, werden diese Faserhalbzeuge bzw. die darin enthaltenden Fasermaterialien mit einer Polymerharz-Zusammensetzung imprägniert. Das dabei vorzugsweise anzuwendende Verfahren ist heute das Pulverimprägnieren.

Beim Pulverimprägnieren wird die für die Matrix des Faser-Matrix-Halbzeugs einzusetzende Polymerharz-Zusammensetzung in Pulverform auf die Fasermaterialien bzw. das Faserhalbzeug aufgebracht. Das Auftragen des Pulvers erfolgt vorzugsweise durch Streuen, Rieseln, Drucken, Spritzen, Sprühen, thermisches Spritzen oder Flammspritzen, oder durch Fließbett-Beschichtungsverfahren. Anschließend werden die pulverbeladenen bzw. pulverbeschichteten Faserhalbzeuge einem Thermopressing unterzogen, wobei die Langfasern oder Endlosfasern im Faserhalbzeug möglichst vollständig imprägniert und konsolidiert werden.

Verbundstrukturen aus Fasermaterial auf Basis von Kohlenstofffasern, auch als Carbonfasern bezeichnet, sind besonders interessant, da gerade die Kohlenstofffasern zu sehr guten mechanischen Eigenschaften in Faser-Matrix-Halbzeugen und den daraus herzustellenden Erzeugnissen führen.

Wenn schon das Imprägnieren von Glasfasern ein kritischer Faktor bei der Herstellung von Faser-Matrix-Halbzeugen ist, so kann die Imprägnierung von Fasermaterial aus Kohlenstofffasern mit thermoplastischen Polymeren besonders schwierig sein. Dies gilt insbesondere für Fasermaterial mit hohem Flächengewicht, oder beim Einsatz polarer Polymere aufgrund der geringen Polarität von Kohlenstofffasern.

Gegenwärtige Verfahren unter Verwendung gemahlener Polymer-Zusammensetzungen haben zudem den Nachteil eines hohen Staubanteils. Dieser macht energieaufwendige Absaugprozesse während der Herstellung der Faser-Matrix-Halbzeuge notwendig, was zu Umweltbelastung und zu höheren Kosten führt. Gefilterte Staubrückstände müssen entsorgt werden. Der Staubanteil führt ferner zu einer erhöhten Staubbelastung der Luft in den Fertigungshallen, was bezüglich arbeitshygienischen Aspekten (Exposition der Mitarbeiter) und der Gefahr von Staubgasexplosionen bedenklich sein kann. Gemahlene Polymer-Zusammensetzungen werden durch Mahlen hergestellt. In der Regel erfolgt dies bei tiefen Temperaturen durch ein kryogenes Mahlverfahren, z.B. durch Abkühlen mit flüssigem Stickstoff und anschließendem mechanischen Mahlen. Auch dieser Mahlvorgang ist sehr energieaufwendig und kostenintensiv. Zudem besteht eine hohe Gefahr, dass beim Mahlen (Kondensation von Luftfeuchtigkeit durch niedrige Temperaturen) oder danach die gemahlene Polymer-Zusammensetzung wegen der erheblich vergrößerten Oberfläche des Mahlguts Feuchtigkeit aufnimmt. Feuchtigkeit führt beim Einsatz von Polymeren zu minderwertigerer Qualität (geringer Qualität der Oberfläche, schlechtere mechanische Eigenschaften) des Faser-Matrix-Halbzeuges aufgrund von Polymerabbau und Ausgasen der Feuchte.

Das Mahlen von Polymer-Zusammensetzungen ist zudem ein zusätzlicher Prozessschritt, bei dem die Gefahr besteht, dass es hier zu unerwünschten Verunreinigungen mit entsprechend nachteiligen Auswirkungen auf das Faser-Matrix-Halbzeug bzw. dessen Eigenschaften kommt. Verunreinigungen Im Mahlgut können zudem auftreten, wenn die Polymer-Zusammensetzung zum Mahlen zu anderen Unternehmen transportiert wird und dort die verwendeten Mühlen im Wechsel für verschiedenste Materialien eingesetzt werden.

Es besteht daher ein hohes Interesse darin, einerseits die Handhabung des als Matrixpolymer einzusetzende Polymer-Zusammensetzung aber auch den Imprägniervorgang sowie die parallel stattfindende oder sich an die Imprägnierung anschließende Konsolidierung im Herstellungsprozess von Faser-Matrix-Halbzeugen, insbesondere solchen auf Basis von Kohlenstofffasern, zu optimieren.

Aufgabe der vorliegenden Erfindung war es, das Pulverimprägnierverfahren zur Herstellung von Faser-Matrix-Halbzeugen dahingehend zu verbessern, dass die benötigte Polymer-Zusammensetzung beim Auftragen auf das Fasermaterial zu möglichst wenig Staubentwicklung führt, ohne den Imprägniervorgang oder die Konsolidierung in irgendeiner Weise zu beeinträchtigen.

Aufgabe der vorliegenden Erfindung war es zudem, das Pulverimprägnierverfahren zur Herstellung von Faser-Matrix-Halbzeugen dahingehend zu verbessern, dass es zu einer verbesserten Imprägnierung der Fasern und / oder einer verbesserten Konsolidierung kommt.

Unter Imprägnierung wird erfindungsgemäß das Benetzen aller Fasern mit der Polymer-Zusammensetzung verstanden. Die Konsolidierung bezeichnet das Exprimieren von eingeschlossener Luft. Der Vorgang der Imprägnierung und Konsolidierung ist unter anderem abhängig von den Parametern Temperatur, Druck und Zeit. Beide Eigenschaften, den Grad der Imprägnierung und der Konsolidierung, lassen sich durch die Bestimmung mechanischer Kennwerte am erhaltenen Faser-Matrix-Halbzeug messen bzw. überprüfen, insbesondere durch Messung der Zugfestigkeit an Faser-Matrix-Halbzeug-Probekörpern. Zur Ermittlung der Zugfestigkeit dient der Zugversuch, ein quasistatisches, zerstörendes Prüfverfahren, im Falle von Kunststoffen nach ISO 527-4 oder -5.

### Erfindung

Gegenstand der vorliegenden Erfindung ist ein Verfahren zur Herstellung eines Faser-Matrix-Halbzeugs umfassend
a. Bereitstellen wenigstens eines Fasermaterials, vorzugsweise eines Fasermaterials enthaltend Endlosfasern,
b. Bereitstellen einer Polymer-Zusammensetzung in Form eines Mikrogranulats,
c. Auftragen des Mikrogranulats auf das Fasermaterial,
d. Imprägnieren und Konsolidieren des Fasermaterials mit der Polymer-Zusammensetzung zu einem Verbund durch Einwirken von Temperaturen ≥ der Schmelztemperatur des wenigstens einen Polymers und Druck auf das mit Mikrogranulat beaufschlagte Fasermaterial,
e. Abkühlen unter Erhalt der Verbundstruktur.

Indem man wenigstens ein Fasermaterial mit einer Polymer-Zusammensetzung in Form eines Mikrogranulats Hitze und Druck aussetzt, erfolgt eine Imprägnierung und Konsolidierung der Fasern mit der einzusetzenden Polymer-Zusammensetzung und man erhält ein Faser-Matrix-Halbzeug in Form einer Verbundstruktur unter Vermeidung der oben genannten Nachteile.

Zur Klarstellung sei angemerkt, dass alle aufgeführten, allgemeinen oder in Vorzugsbereichen genannten Definitionen und Parameter in beliebigen Kombinationen umfasst sind. Im Rahmen dieser Anmeldung zitierte Normen gelten in der zum Anmeldetag gültigen Fassung. Eine Polymer-Zusammensetzung im Sinne der vorliegenden Erfindung ist eine Zusammensetzung enthaltend wenigstens ein Polymer.

Erfindungsgemäß lassen sich aber auch mit Spritzgussmassen überspritzte oder umspritzte Verbundstrukturen herstellen, indem entweder während der Konsolidierung oder in einem zusätzlichen Verfahrensschritt Verstärkungen, vorzugsweise rippenförmige Verstärkungsstrukturen, oder Funktionselemente durch Spritzguss an die Verbundstruktur angefügt werden.

### Begriffsbestimmungen

Die in der vorliegenden Beschreibung verwendeten Begriffe "über", "bei" oder "etwa" sollen bedeuten, dass der danach genannte Betrag oder Wert der konkrete Wert oder ein etwa gleicher Wert sein kann. Der Ausdruck soll vermitteln, dass ähnliche Werte zu erfindungsgemäß gleichwertigen Ergebnissen oder Effekten führen und von der Erfindung mit umfasst werden.

Eine "Faser" im Sinne der vorliegenden Erfindung ist ein makroskopisch homogener Körper mit hohem Verhältnis von Länge zu seiner Querschnittsfläche. Der Faserquerschnitt kann eine beliebige Form sein, ist aber in der Regel rund oder oval.

Gemäß "http://de.wikipedia.org/wiki/Faser-Kunststoff-Verbund" unterscheidet man geschnittene Fasern, auch als Kurzfasern bezeichnet, mit einer Länge im Bereich von 0,1 bis 1 mm,
- Langfasern mit einer Länge im Bereich von 1 bis 50 mm und
- Endlosfasern mit einer Länge L > 50 mm.

Faserlängen können beispielsweise durch Microfokus-Röntgen-Computertomographie (µ-CT) bestimmt werden; DGZfP-Jahrestagung 2007 - Vortrag 47. Erfindungsgemäß herzustellende Faser-Matrix-Halbzeuge werden in erster Linie aus Endlosfasern hergestellt. Sie können aber auch Langfasern enthalten. Endlosfasern werden als Rovings oder Gewebe eingesetzt und erzielen in den daraus herzustellenden Erzeugnissen die höchsten Steifigkeits- und Festigkeitswerte. Der im Rahmen der vorliegenden Anmeldung verwendete Begriff "Fasermaterial" bedeutet ein Material, das entweder als Faserhalbzeug vorliegt und vorzugsweise ausgewählt wird aus der Gruppe Gewebe, Gelege einschließlich Multiaxialgelege, Gesticke, Geflechte, Vliese, Filze, und Matten, oder aber das Fasermaterial sind unidirektionale Faserstränge. Ferner bedeutet Fasermaterial ein Gemisch oder Kombinationen aus zwei oder mehr dieser genannten Faserhalbzeuge bzw. unidirektionalen Faserstränge.

Zur Herstellung von Faserhalbzeugen sind die zu verwendenden Fasern in der Weise miteinander verbunden, dass zumindest eine Faser oder ein Faserstrang mindestens eine andere Faser oder einen anderen Faserstrang berührt, um ein kontinuierliches Material zu bilden. Oder aber, die zur Herstellung von Faserhalbzeugen verwendeten Fasern berühren einander in der Weise, dass eine kontinuierliche Matte, Gewebe, Textil oder ähnliche Struktur gebildet wird.

Der Begriff "Flächengewicht" bezeichnet die Masse eines Materials in Abhängigkeit von der Fläche und bezieht sich im Rahmen der vorliegenden Erfindung auf die trockene Faserschicht. Das Flächengewicht wir nach DIN EN ISO 12127 bestimmt.

Die Fadenzahl in einem Faserbündel oder Kabel ist nützlich bei der Definition einer Kohlenfasergröße. Gängige Größen sind 12.000 (12k) Filamente pro Faserbündel oder 50000 (50k) Filamente pro Faserbündel. Die Fadenzahl wird nach DIN EN 1049-2 bzw. ISO 7211-2 bestimmt.

"Imprägniert" bedeutet im Sinne der vorliegenden Erfindung, dass die Polymer-Zusammensetzung in die Vertiefungen und Hohlräume des Fasermaterials bzw. Faserhalbzeugs eindringt und das Fasermaterial benetzt. "Konsolidiert" im Sinne der vorliegenden Erfindung bedeutet, dass in der Verbundstruktur ein Luftanteil von weniger als 10 Volumen-% vorliegt. Imprägnierung (Benetzung des Fasermaterials durch die Polymer-Zusammensetzung) und Konsolidierung (Minimieren des Anteils eingeschlossener Gase) können gleichzeitig und / oder nacheinander erfolgen und / oder durchgeführt werden.

### Verfahrensschritt a)

Das im Verfahrensschritt a) bereitzustellende **Fasermaterial** ist vorzugsweise ein Fasermaterials enthaltend Endlosfasern. In einer Ausführungsform kann das erfindungsgemäß einzusetzende Fasermaterial zusätzlich zu den Endlosfasern noch Langfasern mit Längen im Bereich von 1 bis 50 mm enthalten.

Vorzugsweise enthält das erfindungsgemäß einzusetzende Fasermaterial keine zerkleinerten Fasern oder Teilchen, insbesondere keine Kurzfasern mit einer Länge im Bereich von 0,1 bis 1 mm.

Das Fasermaterial ist erfindungsgemäß vorzugsweise einzusetzen in Form eines Faserhalbzeugs oder in Form unidirektionaler Faserstränge. Bevorzugte Faserhalbzeuge sind gewebte oder nichtgewebte Strukturen. Vorzugsweise wird wenigstens ein Faserhalbzeug aus der Gruppe Gewebe, Gelege einschließlich Multiaxialgelege, Gesticke, Geflechte, Vliese, Filze, Matten, ein Gemisch aus zwei oder mehr dieser Materialien, und Kombinationen davon eingesetzt.

Vliese können mit zufälliger Faserausrichtung oder mit ausgerichteten Faserstrukturen ausgewählt werden. Zufällige Faserorientierungen finden sich vorzugsweise in Matten, in genadelten Matten oder als Filz. Ausgerichtete faserige Strukturen finden sich vorzugsweise in unidirektionalen Fasersträngen, bidirektionalen Fasersträngen, multidirektionalen Fasersträngen, multiaxialen Textilien. Vorzugsweise ist das einzusetzende Fasermaterial ein unidirektionales Gelege oder ein Gewebe.

Vorzugsweise werden Fasermaterialien aus Glasfasern und/oder Kohlenstofffasern eingesetzt, besonders bevorzugt aus Glasfasern.

Vorzugsweise ist das Fasermaterial aus Kohlenstofffasern ein Gewebe mit einem Flächengewicht von größer als oder gleich 150 g / m².

Vorzugsweise ist das Fasermaterial aus Glasfasern ein Gewebe. Vorzugsweise hat das Fasermaterial aus Glasfasern ein Flächengewicht größer oder gleich 200 g / m², besonders bevorzugt größer als oder gleich 300 g / m².

In einer Ausführungsform der Erfindung werden Kombinationen von Fasermaterial aus Kohlenstofffasern und Fasermaterial aus Glasfasern eingesetzt. Bevorzugt sind Fasermaterialkombinationen bzw. Faserhalbzeuge enthaltend in den Außenlagen Kohlenstofffasern und in wenigstens einer Innenlage Glasfasern.

Vorzugsweise enthält ein erfindungsgemäß herzustellendes Faser-Matrix-Halbzeug mehrere Schichten von Fasermaterialien, die mit einer oder mehreren Polymer-Zusammensetzungen in Mikrogranulatform imprägniert werden.

Vorzugsweise liegt der Gehalt an Fasermaterialien im erfindungsgemäß herzustellenden Faser-Matrix-Halbzeug im Bereich von 40 bis 75 Gewichtsprozent, besonders bevorzugt im Bereich von 65 bis 75 Gewichtsprozent.

### Verfahrensschritt b)

Vorzugsweise ist das wenigstens eine Polymer in der Polymer-Zusammensetzung ein Thermoplast. Besonders bevorzugt enthält die im Verfahrensschritt b) bereitzustellende Polymer-Zusammensetzung wenigstens einen Thermoplasten aus der Gruppe Polyamid (PA), Polycarbonat (PC), thermoplastisches Polyurethan (TPU), Polybutylenterephthalat (PBT), Polyphenylensulfid (PPS), Polyphthalamid (PPA), Polypropylen (PP), Polyethylenterephthalat (PET), Polyethylen (PE), Polymilchsäuren (PLA), Acrylnitril-Butadien-Styrol (ABS), Styrol-Acrylnitril (SAN), Polyetheretherketon (PEEK), Polyetherimid (PEI), Polyethersulfon (PES), Polymethylmethacrylat (PMMA), Polyoxymethylen (POM) und Polystyrol (PS), deren Derivate und Blends,

Ganz besonders bevorzugt enthält die Polymer-Zusammensetzung wenigstens einen Thermoplasten aus der Gruppe Polyamid (PA), Polycarbonat (PC), thermoplastisches Polyurethan (TPU), Polybutylenterephthalat (PBT), Polypropylen (PP), Polyethylenterephthalat (PET) und Polyethylen (PE) deren Derivate und Blends.

Insbesondere bevorzugt enthält die Polymer-Zusammensetzung wenigstens einen Thermoplasten aus der Gruppe Polypropylen (PP), Polyamid (PA), Polycarbonat (PC), Polybutylenterephthalat (PBT) und Polyethylenterephthalat (PET) deren Derivate und Blends,

Vorzugsweise wird eine Polymer-Zusammensetzung aus wenigstens PA eingesetzt. PA kann aus unterschiedlichen Bausteinen synthetisiert und nach verschiedenen Verfahren hergestellt werden und im speziellen Anwendungsfall allein oder in Kombination mit Verarbeitungshilfsmitteln, Stabilisatoren, polymeren Legierungspartnern (z.B. Elastomeren) oder auch Verstärkungsmaterialien (wie z.B. mineralischen Füllstoffen oder Glasfasern) und gegebenenfalls weiteren Additiven, zu Werkstoffen mit speziell eingestellten Eigenschaftskombinationen ausgerüstet werden. Geeignet sind auch PA-Blends mit Anteilen von anderen Polymeren, bevorzugt von Polyethylen, Polypropylen, ABS, wobei gegebenenfalls ein oder mehrere Kompatibilisatoren eingesetzt werden können. Die Eigenschaften der Polyamide können nach Bedarf durch Zusatz von Elastomeren verbessert werden.

Zur Herstellung von PA sind eine Vielzahl von Verfahrensweisen bekannt geworden, wobei je nach gewünschtem Endprodukt unterschiedliche Monomerbausteine oder verschiedene Kettenregler zur Einstellung eines angestrebten Molekulargewichtes oder auch Monomere mit reaktiven Gruppen für später beabsichtigte Nachbehandlungen eingesetzt werden.

Bevorzugt einzusetzendes PA wird über Polykondensation in der Schmelze hergestellt, wobei im Rahmen der vorliegenden Erfindung auch die hydrolytische Polymerisation von Lactamen als Polykondensation verstanden.

Erfindungsgemäß bevorzugt einzusetzendes PA geht von Diaminen und Dicarbonsäuren und/oder Lactamen mit wenigstens 5 Ringgliedern oder entsprechenden Aminosäuren aus. Als Edukte kommen bevorzugt aliphatische und/oder aromatische Dicarbonsäuren, besonders bevorzugt Adipinsäure, 2,2,4-Trimethyladipinsäure, 2,4,4-Trimethyladipinsäure, Azelainsäure, Sebazinsäure, Isophthalsäure, Terephthalsäure, aliphatische und/oder aromatische Diamine, besonders bevorzugt Tetramethylendiamin, Hexamethylendiamin, 1,9-Nonandiamin, 2,2,4- und 2,4,4-Trimethyl-hexamethylendiamin, die Isomeren Diamino-dicyclohexylmethane, Diaminodicyclohexylpropane, Bisaminotnethyl-cyclohexan, Phenylendiamine, Xylylendiamine, Aminocarbonsäuren, insbesondere Aminocapronsäure, oder die entsprechenden Lactame in Betracht. Copolyamide aus mehreren der genannten Monomeren sind eingeschlossen.

Besonders bevorzugt wird PA aus Lactamen eingesetzt, ganz besonders bevorzugt werden Caprolactame, insbesondere bevorzugt wird ε-Caprolactam eingesetzt.

Auch durch aktivierte anionische Polymerisation hergestelltes PA oder durch aktivierte anionische Polymerisation hergestelltes Copolyamid mit Polycaprolactam als Hauptbestandteil kann erfindungsgemäß eingesetzt werden Die aktivierte anionische Polymerisation von Lactamen zu Polyamiden wird in technischem Maßstab so durchgeführt, dass man einerseits eine Lösung von Katalysator in Lactam, gegebenenfalls mit Schlagzähmodifikator, und andererseits eine Lösung von Aktivator in Lactam herstellt, wobei üblicherweise beide Lösungen so zusammengesetzt sind, dass ein Zusammengeben im gleichen Verhältnis die gewünschte Gesamtrezeptur ergibt. Weitere Additive können gegebenenfalls der Lactamschmelze zugegeben werden. Die Polymerisation erfolgt durch Vermischen der Einzellösungen zur Gesamtrezeptur bei Temperaturen im Bereich von 80°C bis 200°C, bevorzugt bei Temperaturen im Bereich von 100°C bis 140°C. Als Lactame kommen cyclische Lactame mit 6 bis 12 C-Atomen in Frage, bevorzugt Laurinlactam oder ε-Caprolactam, besonders bevorzugt ε-Caprolactam. Der Katalysator ist ein Alkali- oder Erdalkalilactamat, bevorzugt als Lösung in Lactam, besonders bevorzugt Natriumcaprolactamat in ε-Caprolactam. Als Aktivator im erfindungsgemäßen Sinne können N-Acyllactame oder Säurechloride oder, bevorzugt, aliphatische Isocyanate, besonders bevorzugt Oligomere des Hexamethylendiisocyanats eingesetzt werden. Als Aktivator kann sowohl die Reinsubstanz wie auch bevorzugt eine Lösung, bevorzugt in N-Methylpyrrolidon, dienen.

Vorzugsweise wird eine Polymer-Zusammensetzung aus wenigstens **PC** eingesetzt. Besonders bevorzugt werden Polycarbonate auf Basis von 2,2-Bis(4-hydroxyphenyl)-propan (Bisphenol A), Bis(4-hydroxyphenyl)sulfon (Bisphenol S), Dihydroxydiphenylsulfid, Tetramethylbisphenol A, 1,1-Bis(4-hydroxyphenyl)-3,3,5-trimethylcyclohexan (BPTMC) oder 1,1,1-Tris(4-hydroxyphenyl)-ethan (THPE) eingesetzt. Insbesondere bevorzugt wird PC auf Basis von Bisphenol A eingesetzt.

Vorzugsweise wird eine Polymer-Zusammensetzung aus wenigstens **TPU** eingesetzt. Thermoplastische Elastomere (gelegentlich auch *Elastoplaste* (TPE)) sind erfindungsgemäß einzusetzende Polymere, die sich bei Raumtemperatur vergleichbar den klassischen Elastomeren verhalten, sich jedoch unter Wärmezufuhr plastisch verformen lassen und somit ein thermoplastisches Verhalten zeigen. Man unterscheidet zwei TPU Typen, Polyester-basierte TPUs abgeleitet von Adipinsäureestern und Polyether-basierte TPUs abgeleitet von Tetrahydrofuranethern. Vorzugsweise werden Polyester-basierte TPUs eingesetzt.

Vorzugsweise wird eine Polymer-Zusammensetzung aus wenigstens **PBT** [CAS Nr. 24968-12-5] eingesetzt. PBT entsteht durch Polykondensation des Zwischenprodukts Bis(4-hydroxybutyl)terephthalsäureester. Letzterer kann durch Veresterung von 1,4-Butandiol und Terephthalsäure oder durch katalytische Umesterung von Dimethylterephthalat mit 1,4-Butandiol in Gegenwart von Umesterungskatalysatoren wie z. B. Tetraisopropyltitanat hergestellt werden. Besonders bevorzugt einzusetzendes PBT enthält mindestens 80 Mol-%, vorzugsweise mindestens 90 Mol-%, bezogen auf die Dicarbonsäure, Terephthalsäurereste und mindestens 80 Mol-%, vorzugsweise mindestens 90 Mol-%, bezogen auf die Diolkomponente, Butandiol-1,4-glykol Reste.

Vorzugsweise wird eine Polymer-Zusammensetzung aus wenigstens **PPS** eingesetzt. PPS [CAS Nr. 26125-40-6 oder 25212-74-2] ist ein hochtemperaturbeständiges thermoplastisches Polymer der allgemeinen Formel (SC₆H₄)ₙ. Technisch wird es meist durch Polykondensation von 1,4-Dichlorbenzol mit Natriumsulfid in aprotischen Lösemitteln wie *N*-Methylpyrrolidon hergestellt.

Vorzugsweise wird eine Polymer-Zusammensetzung aus wenigstens **PPA** eingesetzt. PPA sind aromatische Polyamide, die in der Regel nur in modifizierter Form (verstärkt oder gefüllt) zum Einsatz kommen. Sie gehören zur Klasse der Thermoplaste. Als Monomere zur Herstellung von Polyphthalamiden dienen Diamine unterschiedlicher Kettenlänge und die aromatische Dicarbonsäure Terephthalsäure. Unter Abspaltung von Wasser polykondensieren diese Monomere zu dem Polymer.

Vorzugsweise wird eine Polymer-Zusammensetzung aus wenigstens **PP** eingesetzt. PP [CAS Nr. 9003-07-0] ist ein teilkristalliner Thermoplast und gehört zu der Gruppe der Polyolefine. Polypropylen wird durch Polymerisation des Monomers Propen mit Hilfe von Katalysatoren gewonnen.

Vorzugsweise wird eine Polymer-Zusammensetzung aus wenigstens **PET** eingesetzt. PET [CAS Nr. 25038-59-9] ist ein durch Polykondensation hergestelltes thermoplastisches Polymer aus der Familie der Polyester auf Basis der Monomere Ethylenglycol und Terephthalsäure. Besonders bevorzugt einzusetzendes PET enthält mindestens 80 Mol-%, vorzugsweise mindestens 90 Mol-%, bezogen auf die Dicarbonsäure, Terephthalsäurereste und mindestens 80 Mol-%, vorzugsweise mindestens 90 Mol-%, bezogen auf die Diolkomponente, Ethylenglykolreste.

Vorzugsweise wird eine Polymer-Zusammensetzung aus wenigstens **PE** eingesetzt. Polyethylen [CAS Nr. 9002-88-4] ist ein teilkristalliner und unpolarer Thermoplast. Durch die Wahl der Polymerisationsbedingungen lassen sich Molmasse, Molmassenverteilung, mittlere Kettenlänge und Verzweigungsgrad einstellen. Aufgrund der unterschiedlichen Dichte unterscheidet man vier Haupttypen, wobei die Kurzbezeichnungen nicht immer einheitlich verwendet werden:
- Polyethylen hoher Dichte (high density), PE-HD oder HDPE
- Polyethylen mittlerer Dichte (medium density), PE-MD oder MDPE
- Polyethylen niedriger Dichte (low density), PE-LD oder LDPE
- lineares Polyethylen mit niedriger Dichte (linear, low density), PE-LLD oder LLDPE.

Erfindungsgemäß ganz besonders bevorzugt sind HDPE oder LDPE.

Vorzugsweise wird eine Polymer-Zusammensetzung aus wenigstens **PLA** eingesetzt. Polylactide [CAS Nr. 26100-51-6] sind synthetische Polymere, die zu den Polyestern zählen und die durch die ionische Polymerisation von Lactid, einem ringförmigen Zusammenschluss von zwei Milchsäuremolekülen, zugänglich sind. Sie sind aus vielen, chemisch aneinander gebundenen Milchsäuremolekülen aufgebaut.

Vorzugsweise wird eine Polymer-Zusammensetzung aus wenigstens **ABS** eingesetzt. ABS [CAS Nr. 9003-56-9] ist ein synthetisches Terpolymer aus den drei unterschiedlichen Monomerarten Acrylnitril, 1,3-Butadien und Styrol und gehört zu den amorphen Thermoplasten. Vorzugsweise variieren die Mengenverhältnisse im ABS im Bereich von 15-35 Gew.-% Acrylnitril, 5-30 Gew.-% Butadien und 40-60 Gew.-% Styrol. Vorzugsweise wird eine Polymer-Zusammensetzung aus wenigstens **SAN** eingesetzt. SAN [CAS Nr. 9003-54-7] ist als Copolymer aus Styrol und Acrylnitril dem Polystyrol in Struktur und Eigenschaften ähnlich. Vorzugsweise weist SAN einen Styrolanteil im Bereich von 65 bis 81 Gew.-% und einen Acrylnitrilanteil im Bereich von 19 bis 35 Gew.-% auf. Besonders bevorzugt sind 70 Gew.-% Styrolanteil und 30 Gew.-% Acrylnitrilanteil.

Vorzugsweise wird eine Polymer-Zusammensetzung aus wenigstens **PEEK** eingesetzt. PEEK [CAS Nr. 29658-26-2] ist ein hochtemperaturbeständiges thermoplastisches Polymer und gehört zur Stoffgruppe der Polyaryletherketone. Seine Schmelztemperatur beträgt 335 °C. PEEK-Polymere entstehen durch Alkylierung von Bisphenol-Salzen. Ganz besonders bevorzugt ist PEEK auf Basis der Reaktion von 4,4'-Difluorobenzophenon und Hydrochinon-Salz.

Vorzugsweise wird eine Polymer-Zusammensetzung aus wenigstens **PEI** eingesetzt. PEI [CAS Nr. 61128-46-9] wird durch Polykondensation von Bisphthalsäureanhydrid und 1,3-Diaminobenzol oder *N*-Phenyl-4-nitrophthalimid und dem Dinatriumsalz von Bisphenol A hergestellt.

Vorzugsweise wird eine Polymer-Zusammensetzung aus wenigstens **PES** eingesetzt. Polyethersulfon [CAS Nr. 25608-63-3] ist ein amorphes, durchsichtiges Hochleistungspolymer mit leicht bräunlicher Transparenz. Die Synthese des Poly(oxy-1,4-phenylsulfonyl-1,4-phenyl) kann sowohl über eine Polysulfonylierung als auch über eine Polyethersynthese ablaufen.

Vorzugsweise wird eine Polymer-Zusammensetzung aus wenigstens **PMMA** eingesetzt. PMMA [CAS Nr. 9011-14-7] wird routinemäßig radikalisch durch Emulsions-, Lösungs- und Substanzpolymerisation hergestellt. Auf solche Weise produziertes PMMA ist ataktisch und völlig amorph. Eine anionische Polymerisation von PMMA ist ebenfalls möglich.

Vorzugsweise wird eine Polymer-Zusammensetzung aus wenigstens **POM** eingesetzt. Beim POM [CAS Nr. 9002-81-7] unterscheidet man zwischen dem Homo- und Copolymer, welche nach unterschiedlichen Verfahren hergestellt werden. Das Homopolymer (auch als POM-H bezeichnet) hat die Struktur -(CH₂-O-)ₙ und unterscheidet sich im Wesentlichen durch den Polymerisationsgrad von Paraformaldehyd und wird meist durch direkte Polymerisation von Formaldehyd erhalten. Das Copolymer, auch als POM-C bezeichnet, hat die Struktur -[(CH₂-O)ₙ-(CH₂-CH₂-O-)ₘ], und wird durch Copolymerisation von Trioxan mit 1,4-Dioxan erhalten.

Vorzugsweise wird eine Polymer-Zusammensetzung aus wenigstens **PS** eingesetzt. PS [CAS Nr. 9003-53-6] ist ein transparenter, geschäumt weißer, amorpher oder teilkristalliner Thermoplast, der durch Polymerisation von monomerem Styrol gewonnen wird.

Die erfindungsgemäß einzusetzende Polymer-Zusammensetzung enthält vorzugsweise wenigstens ein(en) Zusatzstoff oder Additiv, besonders bevorzugt wenigstens ein Additiv aus der Gruppe Ultraviolettlicht-Stabilisatoren, Flammschutzmittel, verlaufsfördernde Additive, Gleitmittel, Antistatika, Färbemittel, vorzugsweise Farbstoffe, Pigmente, Ruß, Keimbildner, kristallisationsfördernde Mittel, Füllstoffe und andere Verarbeitungshilfsmittel oder deren Mischungen. Diese Additive und anderen Bestandteile können in Mengen und in Formen eingesetzt werden, wie sie dem Fachmann allgemein bekannt sind, einschließlich in Form von sogenannten Nano-Materialien, bei denen mindestens eine Abmessung der Teilchen im Bereich von 1 bis 1000 nm vorliegt. Vorzugsweise werden im mit dem wenigstens einen Polymer in der Polymer-Zusammensetzung Füllstoffe eingesetzt, insbesondere Kurzglasfasern.

Vorzugsweise werden die Additive im Thermoplasten der Polymer-Zusammensetzung dispergiert. Das Dispergieren erfolgt vorzugsweise mittels eines Schmelzmischverfahrens. Für ein solches Schmelzmischverfahren einzusetzende Mischwerkzeuge sind vorzugsweise Einzel- oder Doppelschneckenextruder oder Banbury-Mischer. Die Additive werden entweder alle auf einmal in einer einzigen Stufe oder schrittweise und dann in der Schmelze vermischt. Beim schrittweise Hinzufügen der Additive zum wenigstens einen Polymer wird zunächst ein Teil der Additive zum Polymer gegeben und in der Schmelze vermischt. Anschließend werden weitere Additive zugegeben und dann solange gemischt, bis eine homogene Zusammensetzung erhalten wird.

Besonders bevorzugt werden die Additive im Thermoplasten in einem vorgelagerten Schritt dispergiert und compoundiert. Compoundieren ist ein Begriff aus der Kunststofftechnik, welcher mit Kunststoffaufbereitung gleichzusetzen ist und den Veredelungsprozess von Kunststoffen durch Beimischung von Zuschlagstoffen (Füllstoffe, Additive usw.) zur gezielten Optimierung der Eigenschaftsprofile beschreibt. Die Compoundierung erfolgt vorzugsweise in Extrudern und umfasst die Verfahrensoperationen Fördern, Aufschmelzen, Dispergieren, Mischen, Entgasen und Druckaufbau. Das Dispergieren erfolgt vorzugsweise mittels eines Schmelzmisch-verfahrens in wenigstens einem Mischwerkzeug. Mischwerkzeuge sind vorzugsweise Einzel- oder Doppelschneckenextruder oder Banbury-Mischer. Die einzelnen Komponenten der Polymer-Zusammensetzung werden in wenigstens einem Mischwerkzeug, bevorzugt bei Temperaturen im Bereich um den Schmelzpunkt des wenigstens einen Polymers in der Polymer-Zusammensetzung gemischt und als Strang ausgetragen. Üblicherweise wird der Strang bis zur Granulierfähigkeit abgekühlt und dann granuliert.

Erfindungsgemäß wird die Polymer-Zusammensetzung als Mikrogranulat eingesetzt. Im Gegensatz zum Stand der Technik, dem Einsatz einer Polymer-Zusammensetzung in Form von gemahlenem Pulver, kann im Falle von Mikrogranulaten auf einen vorgelagerten Bearbeitungsschritt, nämlich das Vermahlen der Polymer-Zusammensetzung verzichtet werden. Vor dem Vermahlen liegt die Polymer-Zusammensetzung in der Regel als Granulat, Flakes oder andere makroskopische Teile vor. Das Mahlen erzeugt Wärme und diese wiederum lässt das Mahlgut in der Mühle verkleben und zusammenklumpen. Im Stand der Technik behilft man sich damit, dass man das Mahlen bei tiefen Temperaturen, als kryogenes Mahlen, durchführt. Die hierfür erforderliche Kühlung sowie der zusätzliche Mahlschritt selber verteuern das Verfahren zur Herstellung von Faser-Matrix-Halbzeugen und führen zu weiteren Nachteilen.

### Mikrogranulat

Ein Mikrogranulat im Sinne der vorliegenden Erfindung hat vorzugsweise eine mittlere Korngröße im Bereich von 0,01 bis 3 mm, besonders bevorzugt im Bereich von 0,1 bis 2 mm und ganz besonders bevorzugt im Bereich von 0,2 bis 1,2 mm, wobei mittlere Korngröße bedeutet, dass die Summe der Massenanteile der Kornfraktionen mit Korngrößen größer als die mittlere Korngröße 50% beträgt. Entsprechend beträgt die Summe der Massenanteile der Kornfraktionen mit Korngrößen kleiner oder gleich der mittleren Korngröße ebenfalls 50%.Die Korngrößen werden mittels Trocken-Siebanalyse gemäß DIN 53477 bestimmt. Die Siebgutmenge beträgt dabei vorzugsweise jeweils 100 g. Unter der Angabe Korngröße wird der Äquivalentdurchmesser der volumengleichen Kugel verstanden und dieser entspricht der Nennweite der Analysensieböffnung. Beispielhaft können entsprechende Siebmaschinen der Firma Karg Industrietechnik (Krailling) verwendet werden.

Die Mikrogranulate haben vorzugsweise die gleiche Form. In einer Ausführungsform kann eine Mischung aus zwei oder mehr, beispielsweise drei oder vier Mikrogranulaten eingesetzt werden, die sich in Bezug auf ihre Form voneinander unterscheiden. Die Mikrogranulate können beispielsweise kugelförmig bzw. ellipsoid (Linsen-förmig), würfelförmig oder zylindrisch sein. Es können auch Mischungen verwendet werden, bei denen die Mikrogranulate aus unterschiedlichen Formmassen und/oder unterschiedlichen Korngrößen und/oder unterschiedlichen Verteilungsbreiten der Korngrößen sind und sich in ihrer Form voneinander unterscheiden.

Bevorzugt haben erfindungsgemäß einzusetzende Mikrogranulate eine zylindrische Form. Das Verhältnis von Zylinderhöhe zu Zylinderdurchmesser liegt vorzugsweise im Bereich von 10 bis 0,5, besonders bevorzugt im Bereich von 5 bis 1.

Bevorzugt haben erfindungsgemäß einzusetzende Mikrogranulate aber auch eine kugelige bzw. ellipsoide Form.

Erfindungsgemäß einzusetzende Mikrogranulate können unterschiedlichste Schüttdichten aufweisen. Bevorzugt werden Mikrogranulate mit Schüttdichten im Bereich von 200 bis 1800 g/l, besonders bevorzugt im Bereich von 500 bis 1000 g/l. Die Bestimmung der Schüttdichte erfolgt, indem ein Messzylinder mit dem Mikrogranulat bei Raumtemperatur bis zu einem Liter gefüllt und anschließend diese Menge Mikrogranulat ausgewogen wird. Schüttdichten werden im Rahmen der vorliegenden Erfindung nach EN ISO 60, vorzugsweise mit einem Schüttdichte Messgerät SMG 697 der Powtec Maschinen & Engineering GmbH, Remscheid, bestimmt.

Erfindungsgemäß einzusetzende Mikrogranulate werden vorzugsweise aus der Schmelze der Polymer-Zusammensetzung hergestellt: Nach der Polymerisierung, Compoundierung oder dem Aufschmelzen liegt der Kunststoff im Extruder zunächst als Schmelze vor. In einem bevorzugten Verfahren wird diese über Düsen zu Strängen geformt und in Luft oder Wasser abgekühlt. In einem besonders bevorzugten Verfahren schneidet anschließend ein rotierendes Messer die Stränge in kurze Abschnitte, die dann als Mikrogranulat vorliegen. Dieses lässt sich nun in Rohrleitungen transportieren oder in Säcke oder andere Gebinde verpacken. In einem anderen bevorzugten Verfahren werden aus der Schmelze kleine Tröpfchen geformt, die anschließend abkühlen und erstarren.

Die für die Mikrogranulate einzusetzenden Polymer-Zusammensetzungen können wenigstens einen Zusatzstoff enthalten. Entweder erfolgt die Zugabe wenigstens eines Zusatzstoffes im Zuge des Aufschmelzens für die Mikrogranulierung oder aber der wenigstens eine Zusatzstoff wird bereits bei der Herstellung der Polymer-Zusammensetzung zugegeben. Ebenso kann ein Teil der Zusatzstoffe während der Herstellung der Polymerisate zugegeben werden, ein weiterer Teil der Zusatzstoffe später eingearbeitet werden. Die Einarbeitung wenigstens eines Zusatzstoffs und/oder die Herstellung der Polymer-Zusammensetzung durch Mischung unterschiedlicher Polymerisate kann z.B. oberhalb deren Erweichungstemperatur und in üblichen Mischvorrichtungen wie Extrudern oder Knetern erfolgen. Anschließend wird die plastifizierte Polymer-Zusammensetzung als Formmasse durch wenigstens eine Düse oder Lochplatte gepresst. Dabei hat die Düse oder haben die Bohrungen der Lochplatte einen Durchmesser, der dem späteren Durchmesser des Mikrogranulats entspricht oder kleiner ist als dieser. In der Regel hat die Düse oder haben die Bohrungen einen Durchmesser der kleiner ist als der Durchmesser des Mikrogranulats. Vorzugsweise liegt das Verhältnis von Düsen- oder Bohrungsdurchmesser zu Durchmesser des Mikrogranulats im Bereich von 0,5:1 bis 0,8:1. Vorzugsweise wird der Austrag aus der Düse oder aus der Lochplatte unter Wasser oder an Luft granuliert. Die Temperatur der Schmelze der Polymer-Zusammensetzung liegt beim Austrag im Bereich um dem Schmelzpunkt des wenigstens einen Polymers oder etwas darüber. Es ist auch möglich, einen, mehrere oder eine Vielzahl von Strängen gleichzeitig auszutragen, diese in Wasser zu kühlen und anschließend zu den Mikrogranulaten zu zerteilen.

Erfindungsgemäß einzusetzende Mikrogranulate werden vorzugsweise direkt aus der Schmelze hergestellt, die bei der Herstellung der Polymer-Zusammensetzung anfällt. So wird ein zusätzlicher Granulierungs- und Wiederaufschmelzprozess vermieden.

Die erfindungsgemäß einzusetzenden Mikrogranulate weisen in der Regel sehr kleine Restgehalte an verdampfbaren Monomeren auf, die aus der Herstellung der Formmasse aus der Polymer-Zusammensetzung stammen.

Für den Einsatz im erfindungsgemäßen Verfahren enthalten die Mikrogranulate im Allgemeinen nur eine geringe Restfeuchte. Vorzugsweise beträgt der Restwassergehalt nicht mehr als 0,3 Gew.-% , besonders bevorzugt nicht mehr als 0,2 Gew.-%, insbesondere nicht mehr als 0,1 Gew.-%, jeweils bezogen auf das Gesamtgewicht. Der Restwassergehalt wird dabei mittels einer Thermowaage, beispielsweise Sartorius MA 30, anhand von Proben eines Gewichts im Bereich von ca. 1 bis 5 g bestimmt, indem das Ausgangsgewicht der Proben bestimmt wird, die Proben bei 160°C für eine Dauer von 20 Minuten getrocknet werden und der Gewichtsverlust bestimmt wird.

Vorzugsweise haben erfindungsgemäß einzusetzende Mikrogranulate eine Shorehärte A von mehr als 90° und eine Shorehärte D von mehr als 60°. Die Bestimmung der Shorehärte erfolgt nach DIN 43505 mit Prüfgerät A bzw. Prüfgerät D.

### Verfahrensschritt c)

Der Auftrag des Mikrogranulats auf die Fasermaterialien im Verfahrensschritt c) erfolgt mittels konventioneller Mittel, vorzugsweise durch Streuen, Rieseln, Drucken, Spritzen, Sprühen, thermisches Spritzen oder Flammspritzen, oder durch Fließbett-Beschichtungsverfahren. In einer Ausführungsform können mehrere Mikrogranulatschichten auf das Fasermaterial aufgebracht werden.

Vorzugsweise erfolgt der Auftrag des Mikrogranulats auf die Fasermaterialien in Mengen woraus ein nach DIN 1310 definierter Volumenanteil an Fasermaterialien im Faser-Matrix-Halbzeug im Bereich von 25 bis 80 %, besonders bevorzugt im Bereich von 40 bis 60 %, resultiert.

In einer Ausführungsform kann dem Auftrag ein Sinterschritt folgen, bei dem das Mikrogranulat auf dem Fasermaterial gesintert wird. Durch das Sintern, gegebenenfalls unter Druck, wird das Mikrogranulat erhitzt, wobei die Temperatur jedoch unterhalb der Schmelztemperatur des jeweils einzusetzenden Polymers bleibt. Dabei kommt es in der Regel zu einer Schwindung, weil sich die Mikrogranulatpartikel des Ausgangsmaterials verdichten und Porenräume im Fasermaterial aufgefüllt werden.

Anschließend werden die Mikrogranulat beschichteten Fasermaterialien im Verfahrensschritt d) dem Thermopressing, also dem Einfluss von Druck und Temperatur, unterzogen. Vorzugsweise erfolgt dies unter Vorwärmen der mit Mikrogranulat beschichteten Fasermaterialien außerhalb des Druckzone.

### Verfahrensschritt d)

Im Verfahrensschritt d) wird das mit Mikrogranulat beschichtete Fasermaterial aufgeheizt, um die Imprägnierung und Konsolidierung des Fasermaterials einzuleiten. Da zusätzlich Druck angewandt wird, bezeichnet man den Vorgang auch als Thermopressing.

Durch Thermopressing werden die Fasermaterialien mit der Polymer-Zusammensetzung imprägniert und konsolidiert. Durch den Einfluss von Druck und Wärme schmilzt das wenigstens eine Polymer der Polymer-Zusammensetzung und durchdringt die Fasermaterialien, die sie damit imprägniert. Durch Entweichen von vorhandenem oder sich dabei bildendem Gas aus den Hohlräumen zwischen Fasermaterial und Polymer-Zusammensetzung findet die Konsolidierung statt. Die Gase enthalten Gas der Umgebung (z.B. Luft oder Stickstoff) und / oder Wasser (Dampf) und/oder thermische Zersetzungsprodukte des einzusetzenden wenigstens einen Polymers.

Vorzugsweise wird Thermopressing bei einem Druck im Bereich von 2 bis 100 bar, besonders bevorzugt im Bereich von 10 bis 40 bar, durchgeführt.

Die beim Thermopressing anzuwendende Temperatur ist ≥ der Schmelztemperatur des wenigstens einen einzusetzenden Polymers. In einer Ausführungsform liegt die beim Thermopressing anzuwendende Temperatur mindestens 10 °C über der Schmelztemperatur des wenigstens einen einzusetzenden Polymers. In einer weiteren Ausführungsform liegt die beim Thermopressing anzuwendende Temperatur mindestens 20 °C über der Schmelztemperatur des wenigstens einen einzusetzenden Polymers. Die Beheizung kann beim Thermopressing durch eine Vielzahl von Mitteln erfolgen, vorzugsweise Kontaktheizung, strahlende Gasheizung, Infrarotheizung, Konvektion oder erzwungene Konvektion, Induktionsheizung, Mikrowellenheizung oder Kombinationen davon. Im unmittelbaren Anschluss daran erfolgt die Konsolidierung.

Die Vorgänge der Imprägnierung und Konsolidierung sind insbesondere abhängig von den Parametern Temperatur und Druck. In einer Ausführungsform ist der anzuwendende Druck zusätzlich noch von der Zeit abhängig.

Vorzugsweise werden die genannten Parameter angewandt, bis das Faser-Matrix-Halbzeug einen Hohlraumgehalt von weniger als 5% aufweist. Besonders bevorzugt wird angestrebt, dass der Hohlraumgehalt von weniger als 5% innerhalb einer Zeitdauer von weniger als 10 Minuten, bei Temperaturen oberhalb 100°C erzielt wird, besonders bevorzugt bei Temperaturen im Bereich von 100°C bis 350°C. Vorzugsweise werden Drücke oberhalb von 20 bar angewandt.

Die Druckbeaufschlagung kann durch ein statisches Verfahren oder durch ein kontinuierliches Verfahren (auch als dynamischer Prozess bekannt) erfolgen, wobei ein kontinuierliches Verfahren aus Geschwindigkeitsgründen bevorzugt ist. Beispiele für Imprägnierungsverfahren umfassen ohne Einschränkung Vakuumformen, Beschichten in einer Form, Quer-Matrize-Extrusion, Pultrusion, Laminieren, Prägen, Membranformen oder Preßformen. Erfindungsgemäß bevorzugt ist die Laminierung.

Bevorzugte Laminierungstechniken umfassen ohne Einschränkung Kalander, Flachbett-Laminierung und Doppelbandpresse-Laminierung. Wenn das Laminieren als Imprägnierungsverfahren verwendet wird, ist vorzugsweise eine gekühlte Doppelpresse einzusetzen (siehe auch EP 0 485 895 B1).

In einer Ausführungsform kann im Verfahrensschritt d) die Verbundstruktur durch ein gleichzeitig anzuwendendes Formgebungsverfahren in eine gewünschte Geometrie oder Konfiguration geformt werden. Bevorzugte Formgebungsverfahren für die geometrische Gestaltung der Verbundstruktur sind Formpressen, Stanzen, Pressen oder jedes Verfahren unter Verwendung von Wärme und / oder Druck. Besonders bevorzugt sind Pressen und Stanzen. Vorzugsweise wird beim Formgebungsverfahren der Druck durch die Verwendung einer hydraulischen Formpresse aufgetragen. Beim Pressen oder Stanzen wird die Verbundstruktur auf eine Temperatur oberhalb der Schmelztemperatur des wenigstens einen Polymers in der Polymer-Zusammensetzung vorgewärmt und mit einer Form-, einer Formungseinrichtung oder einem Formwerkzeug, insbesondere wenigstens einer Formpresse, in die gewünschte Form bzw. Geometrie gebracht.

Zur Erzielung optimaler mechanischer Eigenschaften ist eine möglichst vollständige Imprägnierung der Filamente des Fasermaterials mit dem wenigstens einen Polymer der Polymer-Zusammensetzung wünschenswert. Es wurde gefunden, dass bei Anwesenheit von Fasermaterial aus Glasfasern eine schnelle Imprägnierungsrate von Fasermaterial aus Kohlenstofffasern erfolgt, was zu einem insgesamt schnelleren Gesamtherstellungszyklus von Faser-Matrix-Halbzeugen führt, die sowohl Glas-, als auch Kohlenstofffasern enthalten.

Zeitgleich zur Imprägnierung oder im Anschluss an die Imprägnierung findet die Konsolidierung statt, worunter man das Exprimieren von eingeschlossener Luft und anderen Gasen versteht. Auch die Konsolidierung ist insbesondere abhängig von den Parametern Temperatur, Druck und Zeit.

Beide Eigenschaften, den Grad der Imprägnierung und der Konsolidierung, lassen sich durch die Bestimmung mechanischer Kennwerte messen bzw. überprüfen, insbesondere durch Messung der Zugfestigkeit an Verbundstrukturprobekörpern. Zur Ermittlung der Zugfestigkeit dient der Zugversuch, ein quasistatisches, zerstörendes Prüfverfahren, im Falle von Kunststoffen nach ISO 527-4 oder -5.

In der voll-imprägnierten und voll-konsolidierten Form erfüllen die Fasern des eingesetzten Fasermaterials die Aufgabe, der zu erzeugenden Verbundstruktur Festigkeit und Steifigkeit zu verleihen, wohingegen die Matrix aus wenigstens einem Polymer der Polymer-Zusammensetzung im Vergleich zu den eher spröden Fasern die Bruchdehnung der Verbundstruktur positiv beeinflusst. Durch die unterschiedliche Orientierung der Fasern zum Beispiel in Form eines Gewebes kann speziellen Lastfällen entgegen gewirkt werden (Anisotropie). Eine Isotropie kann zum Beispiel durch die Nutzung eines Wirrfaservlieses erreicht werden.

Da sowohl der Vorgang der Imprägnierung als auch der Vorgang der Konsolidierung von den Parametern Temperatur und Druck abhängig sind, wird der Fachmann diese Parameter dem jeweils einzusetzenden Polymer anpassen. Zudem wird er auch den Zeitraum, über den der Druck angewandt wird, entsprechend dem einzusetzenden Polymer anpassen.

### Verfahrensschritt e)

Nach dem Konsolidieren lässt man die Faserverbundstruktur auf eine Temperatur unterhalb der Schmelztemperatur des Matrixharzes bzw. der Matrixharzzusammensetzung abkühlen und entnimmt die Faserverbundstruktur aus der Presse. Erfolgte gleichzeitig eine Formgebung, so wird nach dem Abkühlen auf eine Temperatur unterhalb der Schmelztemperatur des Matrixharzes bzw. der Matrixharzzusammensetzung, vorzugsweise auf Raumtemperatur (23 +/- 2 °C), die Faserverbundstruktur der Form entnommen.

Das erfindungsgemäße Verfahren ist besonders gut für halbkontinuierliche oder kontinuierliche Pressverfahren, vorzugsweise in Doppelbandpressen oder in kontinuierlichen Formpressen geeignet. Das erfindungsgemäße Verfahren zeichnet sich durch schnelle Imprägnierung und hohe Produktivität aus und erlaubt Faserverbundstrukturen in hohen Raten und geringem Anteil an Poren oder Lufteinschlüssen zu erzeugen.

Vorzugsweise weist ein erfindungsgemäß herzustellendes Faser-Matrix-Halbzeug, also die nach Verfahrensschritt e) erhaltene Verbundstruktur, nur eine Schicht auf, worin die Fasern bzw. das Fasermaterial von der Polymer-Zusammensetzung imprägniert und konsolidiert vorliegen bzw. vorliegt, erfindungsgemäß auch als einschichtiges Faser-Matrix-Halbzeug bezeichnet.

Die Erfindung betrifft daher auch ein einschichtiges Faser-Matrix-Halbzeug indem man dieses erhält durch
a. Bereitstellen wenigstens eines Fasermaterials,
b. Bereitstellen einer Polymer-Zusammensetzung in Form eines Mikrogranulats,
c. Auftragen des Mikrogranulats auf das Fasermaterial,
d. Imprägnieren und Konsolidieren des Fasermaterials mit der Polymer-Zusammensetzung zu einem Verbund durch Einwirken von Temperaturen ≥ der Schmelztemperatur des wenigstens einen Polymers und Druck auf das mit Mikrogranulat beaufschlagte Fasermaterial,
e. Abkühlen unter Erhalt der Verbundstruktur.

Erfindungsgemäß aus Mikrogranulat herzustellende Faser-Matrix-Halbzeuge können für eine Vielzahl von Anwendungen eingesetzt werden. Vorzugsweise werden sie im Automotive Bereich als Komponenten für Pkw, Lkw, Verkehrsflugzeuge, in der Luft- und Raumfahrt, in der Bahn, aber auch für Garten- und Haushaltsgeräte, als Computer-Hardware, in handgeführten elektronischen Geräten, in Freizeitartikeln und Sportgeräten, als Strukturbauteile für Maschinen, in Gebäuden, in Photovoltaikanlagen oder in mechanische Vorrichtungen eingesetzt.

Schließlich betrifft die vorliegende Erfindung die Verwendung einer Polymer-Zusammensetzung in Form von Mikrogranulat zur Herstellung eines Faser-Matrix-Halbzeugs, vorzugsweise eines einschichtigen Faser-Matrix-Halbzeugs.

### Beispiele

Unter Verwendung der beschriebenen Verfahrensschritte a) bis e) wurde ein Faser-Matrix-Halbzeug hergestellt, wobei unter Verfahrensschritt c) einmal gemahlene Polymer-Zusammensetzung (Vergleichsversuch) und das andere mal Polymer-Zusammensetzung in Form von Mikrogranulat (erfindungsgemäßes Beispiel) verwendet wurde.

Als Faserhalbzeug wurde ein Köpergewebe aus Filamentglas mit Webart Twill2/2 mit Silanschlichte und einem Flächengewicht von 290 g/m² eingesetzt.

Der Auftrag des Mikrogranulats bzw. der gemahlenen Polymer-Zusammensetzung auf die Fasermaterialien erfolgte in Mengen, woraus ein nach DIN 1310 definierter Volumenanteil an Fasermaterialien im Faser-Matrix-Halbzeug von 45 % resultierte.

Die Faser-Matrix-Halbzeuge wurden durch Heißverpressen von Fasermaterial und Thermoplast-Matrix bei Temperaturen im Bereich von 290°C bis 320°C hergestellt.
A) Pulver (kryogen gemahlen) einer Polymer-Zusammensetzung auf Basis von Polyamid mit einer mittleren Körngröße von 0,7 mm.
B) Mikrogranulat (zylindrische Form und ellipsoide Form) einer Polymer-Zusammensetzung auf Basis von Polyamid mit einer mittleren Korngröße von 0,7 mm.

| | A | B |
|---|---|---|
| | (Vergleichsbeispiel) | (erfindungsgemäßes Beispiel) |
| Reinheit der Polymer-Zusammensetzung | - | + |
| | (Pulver wies Verunreinigungen in nach dem Mahlen auf) | (Mikrogranulat wies keine Verunreinigungen auf) |
| Energieaufwand zur Herstellung des Faser-Matrix-Halbzeugs | - | + |
| | (höherer Energieaufwand durch Mahlvorgang und bei Herstellung des Faser-Matrix-Halbzeuges) | (niedrigerer Energieaufwand bei Herstellung des Faser-Matrix-Halbzeugs aus Mikrogranulat) |
| Staubentwicklung bei Herstellung des Faser-Matrix-Halbzeugs | - | + |
| | (sichtbare Staubentwicklung) | (Staubentwicklung nicht sichtbar) |
| Feuchtigkeitsaufnahme der Polymer-Zusammensetzung | - | + |
| | (Mahlgut wies höhere Feuchte auf) | (Mikrogranulat wies niedrigere Feuchte auf) |
| Oberflächenqualität des Faser-Matrix-Halbzeugs | - | + |
| | (Inhomogenitäten auf der Oberfläche erkennbar) | (weniger Inhomogenitäten auf der Oberfläche erkennbar) |
| Zugfestigkeit des Faser-Matrix-Halbzeugs | - | + |
| | | (gegenüber Vergleichsbeispiel erhöhte Zugfestigkeit) |

## Patentansprüche

1. Verfahren zur Herstellung eines Faser-Matrix-Halbzeugs umfassend
a. Bereitstellen wenigstens eines Fasermaterials,
b. Bereitstellen einer Polymer-Zusammensetzung in Form eines Mikrogranulats,
c. Auftragen des Mikrogranulats auf das Fasermaterial,
d. Imprägnieren und Konsolidieren des Fasermaterials mit der Polymer-Zusammensetzung zu einem Verbund durch Einwirken von Temperaturen ≥ der Schmelztemperatur des wenigstens einen Polymers und Druck auf das mit Mikrogranulat beaufschlagte Fasermaterial,
e. Abkühlen unter Erhalt der Verbundstruktur.

2. Verfahren gemäß Anspruch 1, **dadurch gekennzeichnet, dass** ein Fasermaterial ausgewählt aus einem Faserhalbzeug oder nichtgewebten Strukturen eingesetzt wird.

3. Verfahren gemäß Anspruch 2, **dadurch gekennzeichnet, dass** das Fasermaterial in Form eines Faserhalbzeugs vorliegt und ausgewählt wird aus der Gruppe Gewebe, Gelege einschließlich Multiaxialgelege, Gesticke, Geflechte, Vliese, Filze, Matten oder unidirektionale Faserstränge, einem Gemisch aus zwei oder mehr dieser Materialien und Kombinationen davon.

4. Verfahren gemäß einem der Ansprüche 1 bis 3, **dadurch gekennzeichnet, dass** die Polymer-Zusammensetzung wenigstens einen Thermoplasten aus der Gruppe Polyamid (PA), Polycarbonat (PC), thermoplastisches Polyurethan (TPU), Polybutylenterephthalat (PBT), Polyphenylensulfid (PPS), Polyphthalamid (PPA), Polypropylen (PP), Polyethylenterephthalat (PET), Polyethylen (PE), Polymilchsäuren (PLA), Acrylnitril-Butadien-Styrol (ABS), Styrol-Acrylnitril (SAN), Polyetheretherketon (PEEK), Polyetherimid (PEI), Polyethersulfon (PES), Polymethylmethacrylat (PMMA), Polyoxymethylen (POM) und Polystyrol (PS), deren Derivate und Blends enthält.

5. Verfahren gemäß einem der Ansprüche 1 bis 4, **dadurch gekennzeichnet, dass** die Polymer-Zusammensetzung wenigstens ein(en) Zusatzstoff oder Additiv enthält.

6. Verfahren gemäß Anspruch 5, **dadurch gekennzeichnet, dass** als Additive Ultraviolettlicht-Stabilisatoren, Flammschutzmittel, verlaufsfördernde Additive, Gleitmittel, Antistatika, Färbemittel, Keimbildner, kristallisationsfördernde Mittel, Füllstoffe und andere Verarbeitungshilfsmittel oder deren Mischungen, eingesetzt werden.

7. Verfahren gemäß einem der Ansprüche 1 bis 6, **dadurch gekennzeichnet, dass** das Mikrogranulat eine mittlere Korngröße im Bereich von 0,01 bis 3 mm aufweist, die mittels Trockensiebanalyse gemäß DIN 53477 bestimmt wird.

8. Verfahren gemäß einem der Ansprüche 1 bis 7, **dadurch gekennzeichnet dass** die Mikrogranulate rund, ellipsoid, würfelförmig oder zylindrisch sind.

9. Verfahren gemäß einem der Ansprüche 1 bis 8, **dadurch gekennzeichnet, dass** das Mikrogranulat eine Schüttdichte im Bereich von 200 bis 1800 g/l aufweist die nach EN ISO 60 bestimmt wird.

10. Verfahren gemäß einem der Ansprüche 1 bis 9, **dadurch gekennzeichnet, dass** die Mikrogranulate einen Gehalt an Restfeuchte von nicht mehr als 0,3 Gew.-% bezogen auf das Gesamtgewicht aufweisen.

11. Verfahren gemäß einem der Ansprüche 1 bis 10, **dadurch gekennzeichnet, dass** die Mikrogranulate eine Shorehärte A von mehr als 90° und eine Shorehärte D von mehr als 60° aufweisen und die Shorehärte nach DIN 43505 mit Prüfgerät A bzw. Prüfgerät D bestimmt wird.

12. Verfahren gemäß einem der Ansprüche 1 bis 11, **dadurch gekennzeichnet, dass** mehrere Mikrogranulatschichten auf das Fasermaterial aufgetragen werden.

13. Verfahren gemäß einem der Ansprüche 1 bis 12, **dadurch gekennzeichnet, dass** der Auftrag des Mikrogranulats auf die Fasermaterialien in Mengen erfolgt, woraus ein nach DIN 1310 definierter Volumenanteil an Fasermaterialien im Faser-Matrix-Halbzeug im Bereich von 25 bis 80 % resultiert.

14. Verfahren gemäß einem der Ansprüche 1 bis 13, **dadurch gekennzeichnet, dass** die in Schritt e) erhaltene Verbundstruktur ein einschichtiges Faser-Matrix-Halbzeug ist.

15. Verwendung einer Polymer-Zusammensetzung in Form von Mikrogranulat zur Herstellung eines Faser-Matrix-Halbzeugs.

16. Einschichtiges Faser-Matrix-Halbzeug, **dadurch gekennzeichnet, dass** man dieses erhält durch
a. Bereitstellen wenigstens eines Fasermaterials,
b. Bereitstellen einer Polymer-Zusammensetzung in Form eines Mikrogranulats,
c. Auftragen des Mikrogranulats auf das Fasermaterial,
d. Imprägnieren und Konsolidieren des Fasermaterials mit der Polymer-Zusammensetzung zu einem Verbund durch Einwirken von Temperaturen ≥ der Schmelztemperatur des Polymers und Druck auf das mit Mikrogranulat beaufschlagte Fasermaterial,
e. Abkühlen unter Erhalt der Verbundstruktur.
